Europäisches Patentamt

European Patent Office

Office européen des brevets

(19)

(11) Veröffentlichungsnummer: **0 254 273
B1**

(12) **EUROPÄISCHE PATENTSCHRIFT**

(45) Veröffentlichungstag der Patentschrift: **27.12.90**

(51) Int. Cl.⁵: **B 65 G 17/20**, B 65 G 19/02

(21) Anmeldenummer: **87110553.2**

(22) Anmeldetag: **21.07.87**

(54) **Stahlbandförderer mit Geländerführung.**

(30) Priorität: **22.07.86 DE 3624710
28.04.87 DE 3714060**

(43) Veröffentlichungstag der Anmeldung:
**27.01.88 Patentblatt 88/04**

(45) Bekanntmachung des Hinweises auf die
Patenterteilung:
**27.12.90 Patentblatt 90/52**

(84) Benannte Vertragsstaaten:
**FR GB IT**

(56) Entgegenhaltungen:
**EP-A-0 112 471
DD-B- 26 146
GB-A-2 148 827**

(73) Patentinhaber: **Schindele, Reinhard
Gottlieb-Daimler-Strasse 22
D-8939 Bad Wörishofen (DE)**

(72) Erfinder: **Schindele, Reinhard
Gottlieb-Daimler-Strasse 22
D-8939 Bad Wörishofen (DE)**

## Beschreibung

Um die, an Zwirnmaschinen gebräuchlichen Gatter und Ablagen für die vorlagespulen und Hülsen, deren Beschickung sehr arbeitsaufwendig ist, durch einen umlaufenden Förderer zu ersetzen, der an einem Kopfende der Maschine wirtschaftlicher beschickt werden kann, hat der Anmelder und Unterzeichner am 21. Juli 1986 in der BRD unter der Nummer P 36 24 710.3 einen "Kettenförderer mit Geländerführung" zum Patent angemeldet

Ein weiterer Keittenförderer mit einer geländerartigen Führung, wobei C-förmige Halte- und Trägerbügel mittels Rollen geführt werden und durch eine Kette miteinander verbunden sind, ist bekannt aus EP—A—112471.

Vielen Betreibern von Zwirnmaschinen geht es aber nicht nur darum, die Maschinen effektiver an einem Kopfende mit vorlagespulen und Leerhülsen zu versorgen, sondern auch die anfallenden Zwirnspulen zu entsorgen.

Am besten wäre, wenn die benötigten Vorlagespulen dirket von der Spulmaschine zur Zwirnmaschine gelangten und die Zwirnspulen direkt zur Weiterverwendung oder Versendung.

Die Hauptkriterien die ein Fördersystem erfüllen muß, um dieser Aufgabe gerecht zu werden sind:

1. Genaue Übereinstimmung des Teilungsmaßes des Förderers mit dem Teilungsmaß der empfangenden Zwirnmaschine.

2. Die Möglichkeit der Schaffung von endlichen Transporteinheiten und deren Transportmöglichkeit über ein, mehrere Maschinen verbindendes Transportwegenetz über den Maschinen.

3. Lastträger die im beladenen und im unbeladenen Zustand eine ausreichend genaue Positionierung für eine automatische Beschickung möglich machen.

4. Eine, gegen Staub und Fusseln unempfindliche und dabei wirtschaftliche Konstruktion.

Erfindungsgemäß wird dies durch einen Stahlbandförderer gemäß Anspruch 1 erreicht.

In der Zeichnung sind dargestellt:

Fig. 1 Ein Querschnitt durch die Geländerführung mit Halter (1). Ein Laufwerk aus Halter- und Trägerbügel (2) mit Lauf- und Führungsrollen (3), befestigt am Stahlband (4) mit Distanzstücken (5) sowie der Querschnitt durch einen Schleppkettenantrieb mit Schleppkette (6) in Gleitleisten (7 + 8), letztere mit einer Aussparung (9) für einen Flachschlauch. Des weiteren zwei winklige Halteschienen (10 + 11) mit Gleitleisten (12). Am Laufwerk befestigt ist die mögliche Ausführung eines Lastträgers (13) mit Aufnahmemöglichkeit für Vorlage- und Zwirnspule (14) längs und/oder quer zur Förderrichtung.

Fig. 2 Die Ansicht einer Geländerführungskurve (15) (auf- und abwärts) um die horizontale Achse mit einer Transporteinheit (16) aus Federstahland-Stücken (4) mit je zwei daran befestigten Laufwerken (17) sowie die Ansicht eines möglichen Lastträgers (13) für Vorlage- und Zwirnspulen (14).

Fig. 3 Einen Querschnitt durch die Geländerführung wie Fig. 1 mit einem Antriebs-Laufwerk mit Friktions-Antriebsrad (18) an einem modifiziertem Halte- und Trägerbügel (19) mit oberen Führungsrollen (3) und daren befestigtem Getriebemotor (20) mit Ketten- oder Riementrieb (21) zur Achse (22) des Friktionsantriebsrades (18).

Fig. 4 Einen Querschnitt durch die Geländerführung mit Laufwerk nach Fig. 1 jedoch mit daran befestigtem Stromabnehmer (23) einegreifend in eine am Halter (1) befetigte handelsübliche Stromschiene (24).

Fig. 5 Die Draufsicht auf eine Geländerführung mit 180-grad Kurve um die vertikale Achse (25) und Anbindung über bewegliche Kurven-Teilstücke (26) an eine tangierende Geländerführung (27) mit beweglichen Teilstücken (28) in der Form eines Zwei-Wege-Weichenknotens.

Innerhalb einer geländerartigen Führung aus zwei übereinander angeordneten auf Spitze stehenden und durch Halterungen (1) verbundenen winkligen Profilen, Formstäben oder Formrohren oder aber runden Rohren (1a + 1b) werden jeweils vier Lauf- und Führungsrollen (3) in einem Winkel zueinander so angeordnet und an einem Halte- und Trägerbügel (2) befestigt, daß je zwei Lauf- und Führungsrollen (3) sich jeweils an dem oberen und unteren Führungsprofil- oder Rohr (1a + 1b) nahezu spielfrei abstützen, wenn je zwei der Halte- und Trägerbügel (2) senkrecht und im rechten Winkel zu der Geländerführung an Teilstücken aus Federbandstahl (4) befestigt werden. Die Halte- und Trägerbügel (2) dienen ihrerseits der Befestigung von geeigneten Aufnahmemittel für Garn- und Zwirnspulen (13) sowie ggf. Leerhülsen, deren Schwerpunkt auch außerhalb der Senkrechten der Geländerführung liegen kann, weil die Halte- und Trägerbügel um die Achse in Förderrichtung durch die Anordnung der Lauf- und Führungsrollen zwangsgeführt sind.

Da die Abstände der Halte- und Trägerbügel zueinander und zu den Enden der Federstahlband-Stücke frei und präzise bestimmt werden können, ergeben mehrere miteinander verbundene Federstahlband-Stückje (4) mit Halte- und Trägerbügeln (2) eine Transporteinheit (16) die sowohl endlich als auch endlos zusammengefügt innerhalb von geeignet installierten Geländerführungen (1 + 1a + 1b) für die angestrebten Transportaufgaben genutzt werden kann.

Indem die Federstahlband-Stücke (4) gelenkig miteinander verbunden werden, können auch Kurven mit horizintaler Achse und entsprechend großem Radius (Fig. 2) befahren werden. Um die hierbei auftretenden Auslenkungen der Federstahlband-Enden gegeneinander zu ermöglichen, sind die Verbindungslöcher als Langlöcher und die Verbindung selbst mit kleinen Spiel ausgeführt.

Kurven mit vertikaler Achse können der Biegefähigkeit des verwendeten Federstahlbandes entsprechend klein ausgeführt werden.

Die Federstahlband-Transporteinheiten können sowohl manuell als auch motorisch bewegt werden.

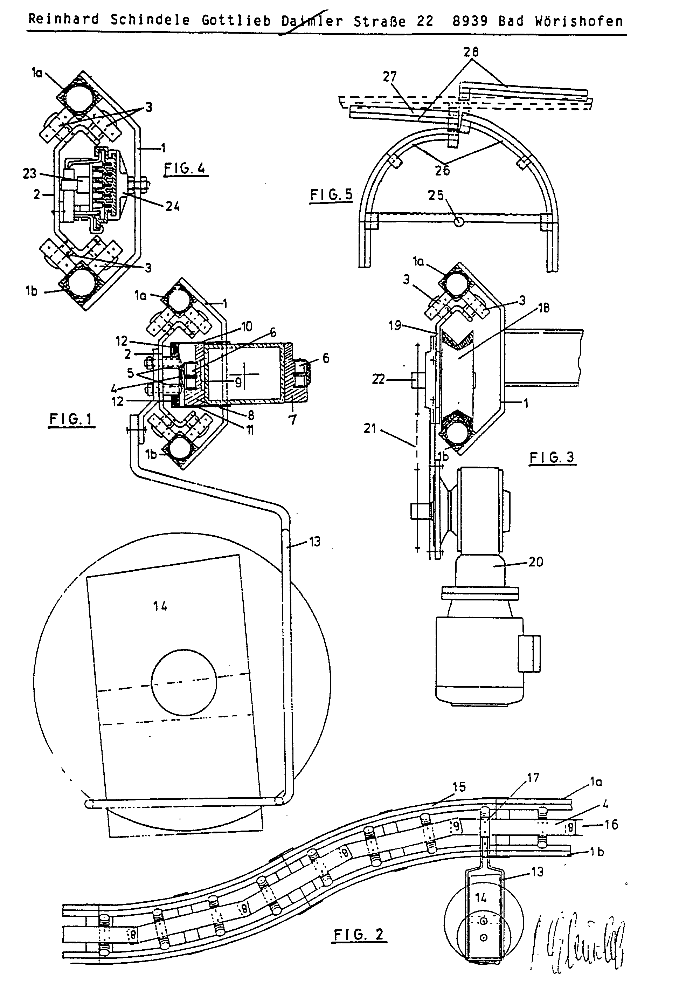

Insbesondere der Bewegung von endlos umlaufenden Transporteinheiten dienen Schleppkettenantrieb nach Fig. 1, die an beliebigen Stellen des Transportweges auch mehrfach angebaut sein können.

Als Schleppkette dienen Rollen ketten mit aufvulkanisierten Gummiprofilen (6), die über je ein Antriebs- und Spannkettenrad umlaufen und von winkelförmigen Gleitleisten (7 + 8) gestützt werden. Die Antriebsseitige Gleitleiste (8) nimmt in einer Aussparung (9) auf der Rückseite einen endlichen, an den Enden verschlossenen Flachschlauch auf, der über einen Anschlußnippel mit Luft aufgeblasen werden kann. Die Schleppkette (6) wird dadurch mit dem Gummiprofilen gegen die Federstahlband-Stücke (4) gedrückt und so der für die Bewegung notwendige Reibschluß hergestellt. Um den Reibschluß auch auf der gesamten Antriebsseite der Schleppkette wirksam zu machen, sind Gegenhalterschienen (10 + 11) mit Gleitleisten (12) so am Antrieb angeordnet, daß sie die obere und untere Kante des Federstahlbandes (4) umgreifen. Dazu sind zwischen den Federstahlband-Stücken (4) und den Halte- und Trägerbügeln (2) Distanzstücke (5) eingefügt.

Durch Schleppkettenantriebe, die in entsprechenden Abständen plaziert sind, können auch endliche Transporteinheiten begrenzter Länge bewegt werden. Es können aber auch elektromotorische Fahrwerke Anwendung finden, die dann über Stromabnehmer und marktübliche Stromschienen gespeist und gesteuert werden können, wie in Fig. 3 + 4 dargestellt.

Da Zwirnmaschinen zwei Bedienseiten haben, muß eine endliche, nur von einer Seite benutzbare Federstahlband-Transporteinheit das Förderoval der Maschine über eine Weiche von der Zuführstrecke aus anfahren und über eine 180 grad Kurve am anderen Ende der Maschine die zweite Bedienseite befahren können. Zum Verlassen des Förderovals über die Abführstrecke muß diese gleichermaßen mit dem Förderoval verbunden werden, so daß sich ein Weichenknoten nach Fig. 5 ergibt der das Ein- und Ausfahren mit sehr kleinen Bewegungen der Weichenzungen ermöglicht.

Zum Einfahren wird erst die zu befahrende Weichenzuge (26) der Kurve und die nicht benötigte Zunge der Ausführstrecke (28) nach außen, weg von Kurvenmittel punkt und dann die nicht benötigte Weichenzunge der Kurve und die Zunge der Zuführstrecke nach innen zum Kurvenmittelpunkt hin bewegt.

Zum Ausfahren aus dem Förderoval werden die Weichenzungen in umgekehrter Weise bewegt.

Die Beweglichkeit der Weichenzungen wird erreicht, indem die beweglichen Teilstücke der Weichenzungen (26 + 28) aus elastischem Material gefertigt werden. Die Zungenbewegungen können sowohl manuell als auch über geeignete Stellglieder erfolgen.

## Patentansprüche

1. Stahlbandförderer mit Geländerführung wobei innerhalb einer geländerartigen Führung aus senkrecht übereinander angeordneten winkligen und auf Eck stehenden oder runden Profilen oder Rohren (1a + 1b) die durch Halterungen (1) verbunden sind, Lauf- und Führungsrollen (3) winklig zueinander so an C-förmigen Halte- und Trägerbügeln (2) befestigt sind, daß sich durch eine Fixierung von je zwei Trägerbügeln an je einem Federstahlband-Stück (4) senkrecht und in rechtem Winkel zu diesem eine nahezu speilfreie Führung der Trägerbügel innerhalb der Geländerführung ergibt, die zum Transport von Garnspulen und Ähnlichem an Halterungen auch mit außermittigem Schwerpunkt an den Trägerbügeln befestigt sein können und mit einem jeweils exakt bestimmbaren Teilungsabstand an Federstahlbandteilstücken befestigt sind, die zu mehreren aneinandergefügt eine endliche oder endlose Transporteinheit ergeben.

2. Stahlbandförderer nach 1 dadurch gekennzeichnet, daß die Federstahlbandteilstücke von Schleppketten mit Gummiprofilen (6) durch Reibschluß dadurch angetrieben werden, daß die Kanten der Federstahlbandteilstücke im Bereich der Schleppkette oben und unten von winkligen Halteschienen (10 + 11) mit Gleitleisten (12) so gegen die Schleppkette gehalten werden, daß die Schleppkette durch Aufblasen eines Flachschlauches zwischen einer abstützenden Gleitleiste (8) und einem Kettenspannholm gegen die Federstahlbandstücke gebreßt wird und der für den benötigten Reibschluß notwendige Druck erzeugt werden kann.

3. Stahlbandförderer nach 1 und 2 dadurch gekennzeichnet, daß an den Enden der Federstahlbandstücke als Langloch senkrecht zur Fördereinrichtung ausgeführte Verbindungslöcher vorgesehen sind.

4. Stahlbandförderer nach 1, 2 und 3 dadurch gekennzeichnet, daß die Geländerführungen im Bereich einer 180 grad Kurve und tangierender Zu- und Abführstrecke als Weichenknoten für die Zu- und Abfahrt von endlichen Transporteinheiten durch Weg- und Zuschwenken von Teilstükken (26 + 28) der Kurven und der zu- und abführenden Geländerführung gestaltet ist und die schwenkbaren Teilstücke der Geländerführung ihre Schwenkbarkeit durch Einfügen von biegbaren Segmenten aus elastischem Material gleichen Querschnittes erhalten.

## Revendications

1. Convoyeur à bande d'acier à guidage en forme de garde-fou, dans lequel, à l'intérieur d'un guidage en forme de garde-fou composé de profilés ou de tubes (1a + 1b) à angles, disposés verticalement l'un au-dessus de l'autre et placés sur leurs arêtes, ou ronds, qui sont reliés par des supports (1), des galets de roulement et de guidage (3) sont fixés en formant un angle entre eux à des étriers de maintien et de support (2) en forme de C de telle manière qu'il se produise, grâce à une fixation de deux étriers de support à chaque fois à un tronçon (4) de bande d'acier à ressort à chaque fois, verticalement et à angle droit par rapport à lui, un guidage à peu près sans jeu à l'intérieur du guidage en forme de garde-fou pour les étriers de support qui peuvent être fixés pour le transport de bobines de fil et similaires sur des supports, même avec un centre de gravité ecentré sur les étriers de support, et qui sont fixés, avec une distance d'écartement qui peut être déterminée à chaque fois avec exactitude, sur des tronçons de bande d'acier à ressort qui, assemblés à plusieurs, fournissent une unité de transport finie ou sans fin.

2. Convoyeur à bande d'acier selon 1, caractérisé par le fait que les éléments de bande d'acier à ressort sont entraînés par accouplement par friction par des chaînes d'entraîement munies de profilés en caoutchouc (6), grâce au fait que les bords des tronçons de bande d'acier à ressort, dans la région de la chaîne d'entraînement, sont maintenus en haut et en bas contre la chaîne d'entraînement par des rails de maintien coudés (10 + 11) munis de barres de glissement (12) de telle mainère que la chaîne d'entraînement soit pressée contre les tronçons de bande d'acier à ressort par gonflement d'uin tuyau plat entre une barre de glissement d'appui (8) et une poutre de serrage de la chaîne, et que la pression nécessitée par l'accouplement par friction qui est nécessaire puisse être engendrée.

3. Convoyeur à bande d'acier selon 1 et 2, caractérisé par le fait qu'il est prévu, aux extrémités des tronçons de bande d'acier à ressort, des trous de liaison réalisés sous la forme de trous allongés perpendiculaires à la direction du transport.

4. Convoyeur à bande d'acier selon 1, 2 et 3, caractérisé par la fait que les guidages en forme de garde-fou, dans la région d'une courbe à 180° et de trajets tangentiels d'entrée et de sortie, sont réalisés sous la forme d'aiguillages pour l'entrée et la sortie d'unités de transport finies où l'on oriente par éloignement et par rapprochement des éléments (26 + 28) des courbes et du guidage en forme de garde-fou d'entrée et de sortie, et que les éléments orientables du guidage en forme de garde-fou reçoivent leur aptitude à être orientés par l'insertion de segments flexibles en matériau élastique de même section transversale.

## Claims

1. Steel band conveyor with railing guide track, wherein within a railing-like guide track consisting of angular sections or pipes located on their edge or round sections or pipes (1 + 1b) positioned vertically above each other and connected by holders (1), transport and guide rollers (3) are attached to C-shaped holding and carrying elements (2) at an angle to each other in such a way that by attaching pairs of carrying elements to each spring steel band section (4) vertically and at right angles to the same the carrying elements are guided with almost no play within the railing guide track, wherein holders which may have a centre of gravity that is off-centre can be attached to the carrying elements to transport bobbins of yarn and similar objects and wherein the carrying elements are attached to spring steel band sections at intervals that can be determined precisely, several of said spring steel band sections being joined together to form a limited-length or endless transport unit.

2. Steel band conveyor according to claim 1, wherein the spring steel band sections are driven by drag chains with rubber profiles (6) by friction engagement, in that the top and bottom edges of the spring steel band sections in the area of the drag chain are held against the drag chain by angular holding bars (10 + 11) with slide rails (12) in such a way that the drag chain is pressed against the spring steel band sections by inflating a flat tube between a supporting slide rail (8) and a chain mounting section and the necessary pressure for the required friction engagement is generated.

3. Steel band conveyor according to claims 1 and 2, wherein connection holes with an oblong shape positioned vertically in relation to the conveyor are provided at the ends of the spring steel band sections.

4. Steel band conveyor according to claims 1, 2 and 3, wherein the railing guide track in the area of a 180 degree curve and an arrival and departure section located at a tangent to the same is designed as a points juction for the arrival and departure of limited-length transport units, with sections (26—28) of the curve and the arrival and departure sections of the railing guide track moving inwards and outwards and wherein the movable sections of the railing guide track are made to be movable by incorporating flexible segments made of elastic material with the same cross-section.

Reinhard Schindele Gottlieb Daimler Straße 22  8939 Bad Wörishofen

FIG. 4

FIG. 1

FIG. 5

FIG. 3

FIG. 2